# DEMANDE DE BREVET EUROPEEN

(11) **EP 4 525 526 A1**
(43) Date de publication de la demande: **19.03.2025**
(21) Numéro de dépôt: 24199571.1
(22) Date de dépôt: 10.09.2024
(51) Int. Cl.: H04W 52/02, H04W 84/18, H04W 88/04, H04L 1/16, H04W 4/02

(54) **PROCEDE DE COMMUNICATION ENTRE DEUX EQUIPEMENTS ET EQUIPEMENTS POUR LA MISE EN OEUVRE DU PROCEDE**

(30) Priorité: 15.09.2023 FR 2309778
(71) Demandeur: Actility, 22300 Lannion (FR)
(72) Inventeur: HERSENT, Olivier, 78430 LOUVECIENNES (FR)
(74) Mandataire: Plasseraud IP

(57) **Abrégé**

Un procédé de de communication entre un premier équipement et un deuxième équipement est proposé, le premier équipement étant un équipement terminal sans fil basse consommation d'un réseau de communication de données de type LP-WAN, et le deuxième équipement étant un équipement sans fil basse consommation n'appartenant pas au réseau de communication de données de type LP-WAN, le premier équipement étant configuré pour se comporter vis-à-vis du deuxième équipement comme un noeud relais. Le procédé est mis en oeuvre par le premier équipement, et comprend : recevoir, par une couche applicative du premier équipement, en provenance du deuxième équipement, un message de réveil ; émettre, vers le deuxième équipement, un message d'acquittement de réception du message de réveil et de synchronisation avec le deuxième équipement ; recevoir, en provenance du deuxième équipement, un paquet de données et renvoyer, vers le réseau de communication de données de type LP-WAN, le paquet de données inséré dans un message de transmission de données dans le sens montant d'un protocole de communication du réseau de communication de données de type LP-WAN.

## Description

### Domaine technique

La présente divulgation se rapporte à un procédé de communication entre deux équipements et un dispositif pour la mise en oeuvre de ce procédé. Elle s'applique notamment à la communication entre équipements, dont un équipement terminal sans fil basse consommation d'un réseau de communication de données de type LP-WAN.

### Technique antérieure

Le développement des techniques de communication entre deux équipements dans le cadre de l'Internet des objets (en anglais « IoT », pour « Internet of Things ») a conduit à l'émergence de réseaux de communication de données de type réseau étendu à basse consommation (LP-WAN, de l'anglais « Low Power Wide Area Network »), comme par exemple le réseau LoRaWAN. Les technologies des réseaux LP-WAN, qui comprennent des protocoles de communication entre noeuds d'un réseau LP-WAN, répondent entre autres à des besoins de gestion d'énergie des équipements (ou noeuds) terminaux qui sont des objets connectés qui fonctionnent généralement sur batterie. Du fait de cette contrainte de gestion d'énergie sur les équipements terminaux, la portée des émissions radio pour des objets fonctionnant sur batterie est limitée à quelques kilomètres.

Différentes technologies de réseau LP-WAN ont été déployées dans le cadre de réseaux opérés, ce qui pose en outre une contrainte supplémentaire pour les utilisateurs de ces réseaux en ce que chaque équipement terminal de ces réseaux fonctionne avec un abonnement auprès de l'opérateur du réseau. Ces solutions commerciales perdent en attractivité pour des cas d'usage requérant potentiellement un très grand nombre d'équipements terminaux avec une intensité de communication faible ou exceptionnelle pour chaque terminal ne justifiant pas un abonnement.

Il existe ainsi un besoin pour un procédé de communication entre deux équipements permettant d'éviter ou d'atténuer les inconvénients précités.

### Résumé

La présente divulgation vient améliorer la situation.

Selon un premier aspect, il est proposé un procédé de de communication entre un premier équipement et un deuxième équipement, le premier équipement étant un équipement terminal sans fil basse consommation d'un réseau de communication de données de type LP-WAN, et le deuxième équipement étant un équipement sans fil basse consommation n'appartenant pas au réseau de communication de données de type LP-WAN, le premier équipement étant configuré pour se comporter vis-à-vis du deuxième équipement comme un noeud relais, le procédé étant mis en oeuvre par le premier équipement, et comprenant : recevoir, par une couche applicative du premier équipement, en provenance du deuxième équipement, sur un ou plusieurs canaux de fréquences définis pour les communications sans fil entre le premier équipement et le deuxième équipement, un message de réveil; émettre, par la couche applicative du premier équipement, vers le deuxième équipement, un message d'acquittement de réception du message de réveil ; recevoir, par la couche applicative du premier équipement, en provenance du deuxième équipement, un paquet de données (par exemple sur un canal de fréquences annoncé par le message de réveil), et transférer, vers un serveur applicatif, par l'intermédiaire d'un noeud du réseau de communication de données de type LP-WAN, des données du paquet de données insérées dans un message de transmission de données dans le sens montant d'un protocole de communication du réseau de communication de données de type LP-WAN.

En utilisant une couche applicative d'un équipement terminal sans fil basse consommation d'un réseau de communication de données de type LP-WAN configurée pour la mise en oeuvre d'échanges de données selon la présente divulgation, le procédé proposé permet avantageusement de ne pas rendre nécessaire un abonnement à un réseau public pour l'ensemble des objets d'une flotte, en particulier dès lors que les objets déjà connectés au réseau public sont en densité suffisante. En effet, le procédé proposé définit un nouveau mode de type relais au niveau applicatif, ce qui permet avantageusement de relayer des données dans des messages de données de charge utile (en anglais, « payload » ou « user payload ») de manière transparente pour l'opérateur du réseau public.

Le procédé proposé selon le premier aspect pourra avantageusement être mis en oeuvre au sein de tout réseau de communication de données de type LP-WAN, comme par exemple un réseau de communication de données comprenant un réseau de type LoRaWAN. Le premier équipement configuré pour la mise en oeuvre d'un mode de réalisation d'un procédé proposé peut par exemple être un équipement configuré comme noeud d'extrémité d'un réseau de type LoRaWAN et en outre configuré pour mettre en oeuvre certaines fonctionnalités de noeud relais de réseau de type LoRaWAN au niveau d'une couche applicative configurée au sein de l'équipement. Par exemple, le premier équipement configuré pour la mise en oeuvre d'un mode de réalisation d'un procédé proposé peut être un équipement configuré comme noeud d'extrémité d'un réseau de type LoRaWAN et configuré avec une application logicielle configurée pour mettre en oeuvre certaines fonctionnalités de noeud relais de réseau de type LoRaWAN. Le réseau de communication de données de type LP-WAN peut ainsi comprendre, dans un ou plusieurs modes de réalisation, un réseau configuré pour mettre en oeuvre une ou plusieurs fonctionnalités d'un des standards LoRaWAN, tels que publiés par le consortium LoRa Alliance, et/ou à leurs évolutions. Dans ce contexte, un mode de type relais applicatif est proposé par la présente divulgation, qui se distingue du mode relais spécifié par le consortium LoRa Alliance qui utilise des trames de niveau sous-couche de contrôle d'accès au support (de l'anglais « Media Access Control », ou « MAC »), dites "MAC commands", qui telles que spécifiées sont utilisables uniquement par l'opérateur du réseau pour relayer les messages d'un deuxième équipement.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Dans un ou plusieurs modes de réalisation, le procédé proposé peut en outre comprendre : émettre, vers le deuxième équipement, un message de commande de configuration comprenant une commande de basculement dans un mode de fonctionnement de type-transpondeur. Dans un ou plusieurs modes de réalisation, ce procédé peut en outre comprendre : émettre, vers un serveur de localisation configuré pour recevoir des données en provenance d'un réseau de communication de données de type LP-WAN, des données échangées avec le deuxième équipement en mode radar.

Dans un ou plusieurs modes de réalisation, le procédé proposé peut en outre comprendre : effectuer une écoute de détection de signaux radio émis sur un ou plusieurs canaux de fréquences de réveil sur des périodes d'écoute, détecter une activité radio lors d'une période d'écoute parmi les périodes d'écoute, et basculer dans un mode de réception pour recevoir le message de réveil.

Dans un ou plusieurs modes de réalisation, le procédé proposé peut en outre comprendre : déterminer, par la couche applicative du premier équipement, si le deuxième équipement correspond à un ou plusieurs équipements listés dans une liste d'équipements prédéfinie.

Selon un autre aspect, il est proposé un procédé de communication entre un premier équipement et un deuxième équipement, le premier équipement étant un équipement terminal sans fil basse consommation d'un réseau de communication de données de type LP-WAN, et le deuxième équipement étant un équipement sans fil basse consommation n'appartenant pas au réseau de communication de données de type LP-WAN, le procédé étant mis en oeuvre par le deuxième équipement, et comprenant : émettre, vers une couche applicative du premier équipement, un message de réveil sur un canal de fréquences défini pour les communications sans fil entre le premier équipement et le deuxième équipement ; recevoir, en provenance de la couche applicative du premier équipement, un message d'acquittement de réception du message de réveil ; et émettre, vers la couche applicative du premier équipement, un paquet de données (par exemple sur un canal de fréquence annoncée par le message de réveil).

Dans un ou plusieurs modes de réalisation, ce procédé proposé peut comprendre en outre : recevoir, en provenance (de la couche applicative) du premier équipement, un message de commande de configuration comprenant une commande de basculement dans un mode de fonctionnement de type transpondeur.

Dans un ou plusieurs modes de réalisation d'un des procédés proposés dans la présente divulgation, le réseau de communication de données peut comprendre un réseau de type LoRaWAN, et le premier équipement peut être un noeud d'extrémité du réseau de type LoRaWAN configuré pour mettre en oeuvre au niveau applicatif (par sa couche applicative) des fonctionnalités de noeud relais de réseau de type LoRaWAN. Dans un ou plusieurs modes de réalisation, un ou plusieurs parmi le message de réveil, le message d'acquittement, et le message de transmission de données dans le sens montant peuvent être des messages du protocole Relais LoRaWAN. Par exemple, dans un ou plusieurs modes de réalisation, le message de réveil peut être un message du type « Wake-On-Radio Relay Join-Request » du protocole Relais LoRaWAN, le message d'acquittement peut être un message du type « Wake-On-Radio Acknowledge » du protocole Relais LoRaWAN, et le message de transmission de données dans le sens montant peut être un message de type « Class A » du protocole Relais LoRaWAN.

Dans un ou plusieurs modes de réalisation d'un des procédés proposés dans la présente divulgation, le message de réveil peut comprendre un code de hachage obtenu par hachage cryptographique d'un identifiant universel étendu, EUI, du deuxième équipement.

Selon un autre aspect, il est proposé un dispositif de communication sans-fil comprenant : un émetteur/récepteur radio ; une mémoire ; au moins un processeur couplé de manière opérationnelle à l'émetteur/récepteur radio et à la mémoire, et configuré pour la mise en oeuvre d'un mode de réalisation d'un procédé tel que proposé dans la présente divulgation.

Selon un autre aspect, il est proposé un procédé de localisation d'équipement mis en oeuvre par un serveur de localisation configuré pour recevoir des données en provenance d'un réseau de communication de données de type LP-WAN, le procédé comprenant : obtenir des informations de localisation d'un premier équipement, le premier équipement étant un équipement terminal sans fil basse consommation du réseau de communication de données de type LP-WAN ; recevoir, en provenance du premier équipement, un paquet de données comprenant un identifiant d'un deuxième équipement, le deuxième équipement étant un équipement sans fil basse consommation n'appartenant pas au réseau de communication de données de type LP-WAN, et déterminer une information de localisation du deuxième équipement sur la base des informations de localisation du premier équipement.

Dans un ou plusieurs modes de réalisation, ce procédé proposé peut comprendre en outre : émettre, vers le premier équipement, une commande de pilotage pour requérir l'émission, par le premier équipement, vers le deuxième équipement, d'un message de commande de configuration comprenant une commande de basculement dans un mode de fonctionnement de type radar. Dans un ou plusieurs modes de réalisation, ce procédé proposé peut comprendre en outre : recevoir, en provenance du premier équipement, des données échangées avec le deuxième équipement en mode radar. Dans un ou plusieurs modes de réalisation, ce procédé proposé peut comprendre en outre : déterminer une localisation fine du deuxième équipement sur la base des données échangées par le premier équipement avec le deuxième équipement en mode radar.

Selon un autre aspect, il est proposé un serveur informatique comprenant : une mémoire ; au moins un processeur couplé de manière opérationnelle à la mémoire, et configuré pour la mise en oeuvre d'un mode de réalisation d'un procédé de localisation proposé dans la présente divulgation.

Selon un autre aspect, il est proposé un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en oeuvre un procédé proposé dans la présente divulgation.

Selon un autre aspect, un serveur informatique est proposé, qui comprend : un processeur et une mémoire couplée de manière opérationnelle au processeur, dans lequel le processeur est configuré pour la mise en oeuvre d'un mode de réalisation d'un procédé proposé.

Selon un autre aspect, un programme d'ordinateur, chargeable dans une mémoire associée à un processeur, et comprenant des portions de code pour la mise en oeuvre d'un ou de plusieurs modes de réalisation d'un procédé proposé dans la présente divulgation lors de l'exécution dudit programme par le processeur, est proposé.

Un autre aspect concerne un ensemble de données représentant, par exemple par voie de compression ou d'encodage, un programme d'ordinateur tel que proposé.

Selon un autre aspect, un support de stockage non-transitoire d'un programme exécutable par ordinateur est proposé, qui comprend un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en oeuvre un ou plusieurs modes de réalisation d'un procédé proposé.

Selon un autre aspect, il est proposé un programme informatique comportant des instructions pour la mise en oeuvre de tout ou partie d'un procédé tel que proposé dans les présentes lorsque ce programme est exécuté par un processeur.

Selon un autre aspect, il est proposé un support d'enregistrement non transitoire, lisible par un ordinateur, sur lequel est enregistré un tel programme.

### Brève description des dessins

D'autres caractéristiques, détails et avantages apparaîtront à la lecture de la description ci-après d'exemples de réalisation non limitatifs, en référence aux dessins annexés, dans lesquels :
**Fig. 1**

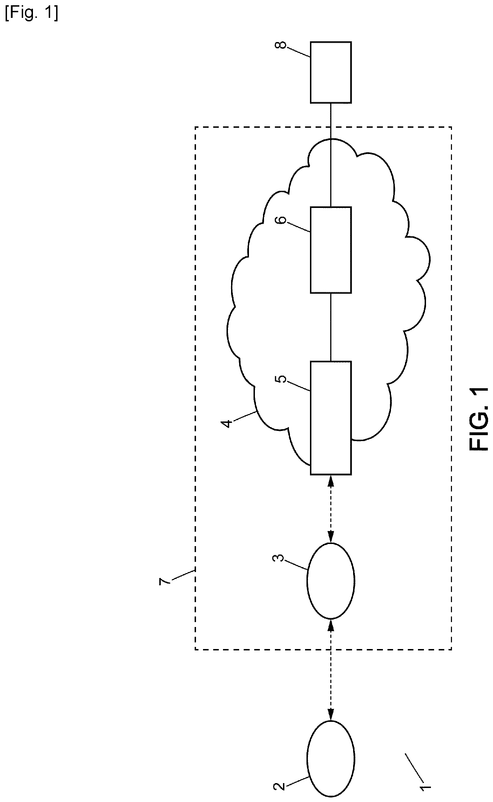

   [Fig. 1] montre un exemple de système de communication pour la mise en oeuvre d'un procédé proposé selon un ou plusieurs modes de réalisation.
**Fig. 2a**

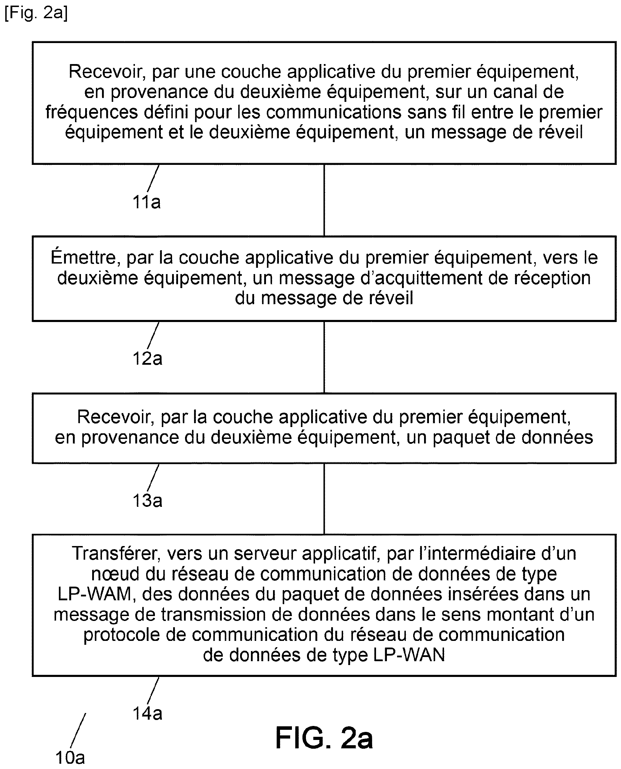

   [Fig. 2a] montre un diagramme illustrant un exemple de mise en oeuvre d'un procédé proposé pour un premier équipement selon un ou plusieurs modes de réalisation.
**Fig. 2b**

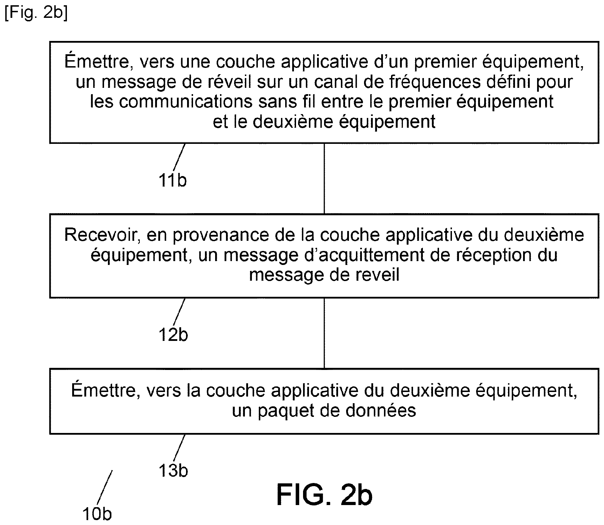

   [Fig. 2b] montre un diagramme illustrant un exemple de mise en oeuvre d'un procédé proposé pour un deuxième équipement selon un ou plusieurs modes de réalisation.
**Fig. 2c**

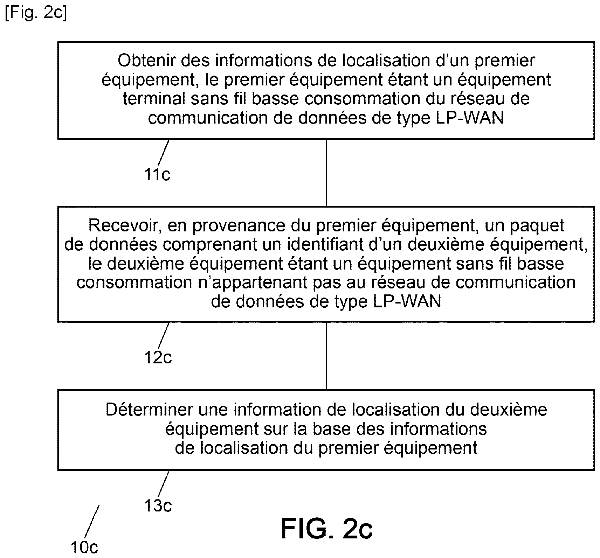

   [Fig. 2c] montre un diagramme illustrant un exemple de mise en oeuvre d'un procédé proposé pour un serveur informatique selon un ou plusieurs modes de réalisation.
**Fig. 3**

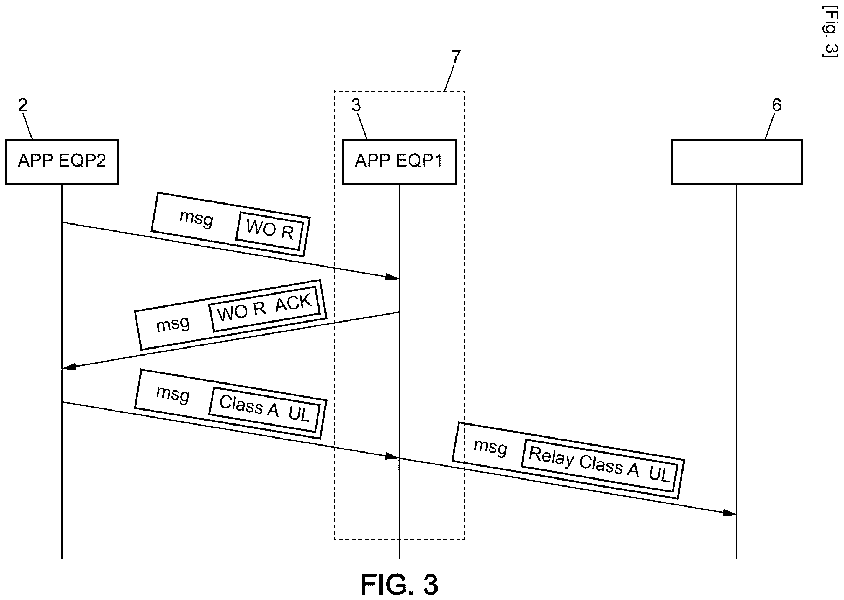

   [Fig. 3] montre un diagramme illustrant un exemple non limitatif d'échanges de message entre un premier équipement et un deuxième équipement, selon un procédé proposé selon un ou plusieurs modes de réalisation.
**Fig. 4a**

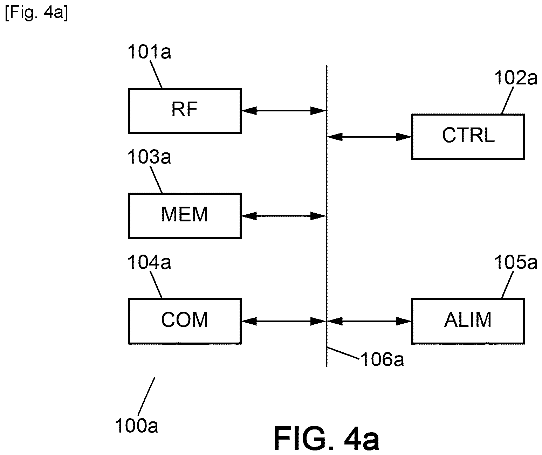

   [Fig. 4a] montre un schéma illustrant un exemple d'architecture d'un premier équipement pour la mise en oeuvre d'un procédé proposé selon un ou plusieurs modes de réalisation.
**Fig. 4b**

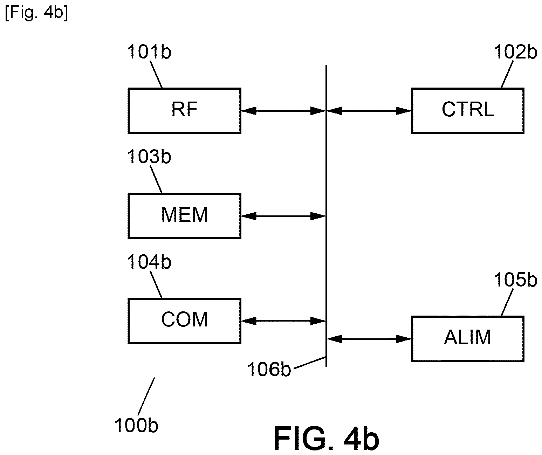

   [Fig. 4b] montre un schéma illustrant un exemple d'architecture d'un deuxième équipement pour la mise en oeuvre d'un procédé proposé selon un ou plusieurs modes de réalisation.

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

La présente description fait référence à des systèmes, sous-systèmes, fonctions, moteurs, unités, modules, plateformes, et illustrations de diagrammes des méthodes et dispositifs selon un ou plusieurs modes de réalisation. Chacun des systèmes, sous-systèmes, fonctions, moteurs, modules, plateformes, unités et diagrammes décrits peut être mis en oeuvre sous forme matérielle, logicielle (y compris sous forme de logiciel embarqué («firmware»), ou de «middleware»), microcode, ou toute combinaison de ces derniers. Dans le cas d'une mise en oeuvre sous forme logicielle, les systèmes, sous-systèmes, fonctions, moteurs, unités, modules, plateformes et/ou illustrations de diagrammes peuvent être mis en oeuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en oeuvre de ces systèmes, sous-systèmes, fonctions, moteurs, unités, modules, plateformes et/ou illustrations de diagrammes.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Les termes «couplé de manière opérationnelle», «couplé», «monté», «connecté» et leurs variantes et formes diverses utilisés dans la présente description font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente description. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Par «serveur», on entend dans la présente description tout point de service (virtualisé ou non) ou dispositif opérant des traitements de données, une ou plusieurs bases de données, et/ou des fonctions de communication de données. Par exemple, et de manière non limitative, le terme «serveur» peut faire référence à un processeur physique couplé de manière opérationnelle avec des fonctions de communication, de base de données et de stockage de données associées, ou faire référence à un réseau, un groupe, un ensemble ou un complexe de processeurs et des dispositifs de stockage de données et de mise en réseau associés, ainsi qu'un système d'exploitation et un ou plusieurs système(s) de base de données et des logiciels applicatifs en support des services et fonctions fournies par le serveur.

Les termes «réseau» et «réseau de communication» tels qu'utilisés dans la présente description font référence à une ou plusieurs liaisons de données qui peuvent coupler ou connecter des dispositifs, éventuellement virtualisés, de manière à permettre le transport de données électroniques entre des systèmes informatiques et/ou des modules et/ou d'autres dispositifs ou équipements électroniques. Un réseau peut comprendre, en tout ou partie, le réseau Internet, un ou plusieurs réseaux locaux (en anglais «Local Area Networks», ou LAN), un ou plusieurs réseaux de type WAN (en anglais «Wide Area Networks»), des connexions de type filaire, des connexions de type sans fil, de type cellulaire, ou toute combinaison de ces différents réseaux.

Les termes « couche applicative » et « applicatif » tels qu'utilisés dans la présente description font référence à une mise en oeuvre par une couche application (par exemple telle que définie dans le modèle OSI) configurée dans un équipement. Des mécanismes de communication offerts aux applications de l'utilisateur peuvent typiquement être mis en oeuvre par la couche application. La couche application peut comprendre un point d'accès aux services réseaux. La couche application peut représenter des données pour l'utilisateur ainsi que du codage et un contrôle du dialogue. Dans un ou plusieurs modes de réalisation, la couche applicative peut correspondre à un moyen de communication (de données, comme par exemple de messages) sur tout canal de communication entre un équipement terminal et un serveur (par exemple un serveur applicatif), le serveur étant accessible par tout noeud du réseau LP-WAN, par opposition aux messages d'infrastructure internes au réseau LP-WAN qui ne sont pas accessibles à l'utilisateur final.

Le terme « application » tel qu'utilisé dans la présente description désigne tout outil qui fonctionne et est opéré au moyen d'un ordinateur, pour fournir ou exécuter une ou plusieurs fonction(s) ou tâche(s) pour un utilisateur ou un autre programme applicatif. Pour interagir avec une application, et la contrôler, une interface utilisateur (par exemple une interface graphique, en anglais, « Graphical User Interface » ou GUI) peut être fournie sur l'équipement sur lequel l'application est mise en oeuvre.

Le terme « terminal » est utilisé dans la présente description pour désigner tout entité, telle qu'une entité logicielle, capable d'établir ou de recevoir des communications reposant sur l'utilisation d'un ou plusieurs protocoles de transport, tels que, par exemple, les protocoles Message Queuing Telemetry Transport (MQTT), Transmission Control Protocol (TCP), and User Datagram Protocol (UDP), et/ou toute entité apte à fonctionner comme point d'extrémité d'une communication établie selon les modalités d'un protocole de communication, tel que, de manière non limitative, un protocole de réseau LP-WAN comme par exemple le protocole LoRaWAN. Pour une communication donnée, un terminal qui met en oeuvre un protocole de communication peut agir en tant que client, serveur, ou les deux. Les exemples de terminaux incluent, de manière non limitative, des objets connectés, des terminaux fixes ou mobiles, des terminaux intelligents (en anglais, « smartphones »), des ordinateurs personnels (en anglais, « Personal Computer » ou « PC »), des tablettes, des serveurs du réseau Internet, etc.

Le terme « paquet », tel qu'utilisé dans la présente description, désigne de manière non limitative toute unité de données susceptible d'être transportée ou transmise entre deux noeuds de réseau, deux stations, deux terminaux, ou au travers d'un ou plusieurs réseaux de données. Un « paquet » peut désigner une ou plusieurs trames, une ou plusieurs unités de données de protocole (en anglais, « Protocol Data Unit », ou « PDU »), un ou plusieurs datagrammes, ou toute autre unité de données. Un paquet par exemple peut inclure un groupe de bits, qui peut inclure un ou plusieurs champs d'adresse, un ou plusieurs champs de contrôle (ou de signalisation), et/ou un ou plusieurs champs de données utiles.

Par « réseau de type LP-WAN », ou de manière abrégée « réseau LP-WAN » ou « LP-WAN », on entend tout réseau de communication de données étendu à basse consommation utilisé dans le domaine de l'Internet des objets et/ou dans la communication inter-machines, ou tout protocole utilisé pour la communication de données entre deux noeuds du réseau.

Bien que les exemples de modes de réalisation décrits ci-dessous sont illustrés avec un exemple de réseau de communication de données de type LP-WAN comprenant un réseau de type LoRaWAN, l'homme du métier pourra comprendre que cet exemple n'est pas limitatif, en ce que le procédé proposé peut également être mis en oeuvre, dans d'autres modes de réalisation, en utilisant d'autres types de réseau LP-WAN, comme par exemple un réseau de type Mioty ou un réseau de type SigFox.

La figure 1 illustre un exemple de système de communication (1) dans lequel un ou plusieurs modes de réalisation des procédés et dispositifs proposés peuvent être mis en oeuvre.

Le système (1) comprend un deuxième équipement (2) et un réseau LP-WAN (7) de communication de données de type LP-WAN. Le réseau LP-WAN (7) de communication de données comprend un premier équipement (3) configuré pour la mise en oeuvre de communications de données avec un serveur applicatif informatique (8) (en anglais, « application server ») par l'intermédiaire d'un serveur de réseau (en anglais, « network server ») (6) et d'une passerelle de réseau (5) d'un réseau (4) de communication de données. Dans l'exemple illustré sur la Fig. 1, les dispositifs deuxième équipement (2), premier équipement (3), passerelle de réseau (5), serveur de réseau (6), et serveur applicatif informatique (8) sont configurés pour être couplés de manière opérationnelle pour des communications de données entre le premier équipement (3) et le serveur applicatif informatique (8) selon un ou plusieurs modes de réalisation de la présente divulgation.

Dans un ou plusieurs modes de réalisation, le premier équipement (3) est un équipement terminal sans fil du réseau LP-WAN (7) de communication de données de type LP-WAN. Le premier équipement (3) peut ainsi être configuré pour effectuer des communications de données sans fil (sur l'interface air) selon tout protocole approprié avec la passerelle de réseau (5). Par exemple, dans un ou plusieurs modes de réalisation, le premier équipement (3) peut être un équipement terminal sans fil basse consommation du réseau LP-WAN (7). Dans un ou plusieurs modes de réalisation, le premier équipement peut en outre être configuré pour effectuer des communications de données sans fil (sur l'interface air) selon tout protocole approprié avec le deuxième équipement (2).

Avantageusement, dans un ou plusieurs modes de réalisation, le premier équipement peut par exemple être un équipement abonné au réseau LP-WAN de type équipement usager. Ainsi, le procédé proposé ne nécessite pas que le premier équipement soit configuré pour mettre en oeuvre une ou plusieurs caractéristiques d'un « équipement réseau » faisant partie de l'infrastructure de l'opérateur, c'est-à-dire disposant des droits pour émettre des commandes réseau accessibles seulement aux équipements d'infrastructure, par opposition aux équipements usagers. Le procédé proposé peut ainsi avantageusement être mis en oeuvre dans un premier équipement qui est, du point de vue du réseau LP-WAN, un équipement de type usager (équipement terminal), par opposition à un équipement d'infrastructure du réseau, comme par exemple un noeud relais du réseau LP-WAN.

Dans un ou plusieurs modes de réalisation, le deuxième équipement (2) peut être configuré pour effectuer des communications de données sans fil (sur l'interface air) selon tout protocole approprié avec le premier équipement (3) du réseau LP-WAN (7). Cependant, comme illustré par la Fig. 1, dans un ou plusieurs modes de réalisation, le deuxième équipement (2) n'est pas un noeud du réseau LP-WAN (7).

Ainsi, dans un ou plusieurs modes de réalisation, on peut envisager un premier équipement (3) qui est un équipement (un noeud) du réseau LP-WAN (7) et qui dispose dès lors d'autorisations pour communiquer sur le réseau LP-WAN (7) avec d'autres équipements du réseau (par exemple, dans le cas où le réseau LP-WAN est opéré, le premier équipement (3) peut être associé à un abonnement au réseau LP-WAN) et un deuxième équipement (2) qui, à la différence du premier équipement (3), n'est pas un équipement (un noeud) du réseau LP-WAN (7).

Le procédé proposé peut ainsi par exemple être mis en oeuvre par un utilisateur final qui dispose d'une flotte d'équipements, parmi lesquels un premier équipement (3) qui est un équipement du réseau LP-WAN (7) et un deuxième équipement (2) qui n'est pas un équipement du réseau LP-WAN (7), les premier et deuxième équipements étant configurés pour la mise en oeuvre des modes de réalisation du procédé proposé.

Dans un ou plusieurs modes de réalisation, le premier équipement (3) peut être en outre configuré, par exemple au niveau de la couche applicative d'un logiciel embarqué, pour se comporter vis-à-vis du deuxième équipement (2) comme un noeud relais. Dans un ou plusieurs modes de réalisation, le premier équipement (3) peut être en outre configuré, par exemple au niveau de la couche applicative d'un logiciel embarqué, pour se comporter vis-à-vis du deuxième équipement (2) comme un noeud relais du réseau LP-WAN (7) de communication de données de type LP-WAN. Dans des modes de réalisation, étant donné que le premier équipement (3) est un équipement terminal du réseau LP-WAN (7), certaines fonctionnalités de noeud relais du réseau LP-WAN (7) peuvent mises en oeuvre au niveau applicatif du premier équipement (3) (puisque le niveau réseau sera configuré avec les fonctionnalités d'équipement terminal du réseau LP-WAN (7)). Ainsi, le premier équipement (3) peut être configuré dans un ou plusieurs modes de réalisation pour fournir certaines fonctionnalités de noeud relais du réseau LP-WAN (7) par une instanciation de mode relais configurée au niveau applicatif du premier équipement (3).

A titre d'exemple non limitatif, le réseau de communication de données de type LP-WAN peut être un réseau de type LoRaWAN, et le premier équipement peut être un noeud d'extrémité (en anglais, « end-node ») ou un équipement terminal (en anglais, « End-Device ») du réseau LoRaWAN configuré pour mettre en oeuvre des fonctionnalités de noeud relais de réseau de type LoRaWAN, par exemple par une instanciation de ces fonctionnalités au niveau applicatif du premier équipement (3). Par exemple, dans un ou plusieurs modes de réalisation, le premier équipement peut être configuré au niveau de la couche réseau (du modèle OSI, selon les standards de réseaux informatiques IEEE 802), ou au niveau d'une ou plusieurs autres couches basses du modèle OSI pour mettre en oeuvre les fonctionnalités d'un équipement terminal de réseau LoRaWAN, telles que spécifiées par l'Alliance LoRa (en anglais, « LoRa Alliance ») dans la spécification LoRa (par exemple une version 1.0.x ou 1.1.x de la spécification LoRaWAN disponible à l'URL https://resources.lora-alliance.org/technical-specifications), et être en outre configuré au niveau applicatif pour mettre en oeuvre certains aspects du mécanisme de relais spécifié dans la spécification « LoRaWAN Relay Spécification TS011-1.0.0 » (ou toute évolution de cette spécification) qui sont utilisés pour la mise en oeuvre d'un mode de réalisation d'un procédé proposé. Le premier équipement (3) peut ainsi par exemple être un équipement terminal de réseau LoRaWAN configuré au niveau applicatif avec un mode relais pour mettre en oeuvre des fonctionnalités de relais LoRaWAN définies dans la spécification « LoRaWAN Relay Spécification TS011-1.0.0 », ce qui permet avantageusement d'utiliser certaines des fonctionnalités d'un relais LoRaWAN au sein d'un équipement qui reste, du point de vue du réseau LoRaWAN auquel il appartient, un équipement terminal et non pas un équipement réseau de type relais.

Dans un ou plusieurs modes de réalisation, le réseau LP-WAN (7) peut ainsi être un réseau de type LoRaWAN, et le premier équipement (3) du réseau LP-WAN (7) peut être un équipement terminal du réseau LoRaWAN configuré pour mettre en oeuvre une ou plusieurs des fonctionnalités de relais du réseau LoRaWAN, par exemple par une instanciation de ces fonctionnalités au niveau applicatif du premier équipement (3).

La mise en oeuvre de fonctions de relais par le premier équipement (3) peut avantageusement être utilisée pour relayer vers le serveur de réseau (6) des données reçues du second équipement (2) par le premier équipement (3), par exemple en utilisant un mécanisme de tunnel, alors que le second équipement (2) n'est pas un noeud du réseau LP-WAN (7), auquel le serveur de réseau (6) appartient. Des données en provenance d'un équipement (2) qui n'appartient pas au réseau LP-WAN (7) LP-WAN peuvent ainsi être acheminées vers un (6) des serveurs de ce réseau LP-WAN (7).

Ainsi, avantageusement, le second équipement (2), qui peut être un des équipements communicants d'une flotte d'équipements de l'utilisateur final sans toutefois être un équipement du réseau LP-WAN (7), peut émettre des données qui sont acheminées vers un (6) des serveurs de ce réseau LP-WAN (7) en utilisant le premier équipement (3) comme relais, sans nécessiter eux-mêmes de faire partie du réseau LP-WAN (7).

La figure 2a illustre un exemple non limitatif de mise en oeuvre (10a), par le premier équipement, d'un procédé proposé selon un ou plusieurs modes de réalisation.

En référence à la figure 2a, on considère un premier équipement et un deuxième équipement, le premier équipement étant un équipement terminal sans fil basse consommation d'un réseau de communication de données de type LP-WAN, et le deuxième équipement étant un équipement sans fil basse consommation n'appartenant pas au réseau de communication de données de type LP-WAN. Par exemple, le premier équipement, le deuxième équipement, et le réseau de communication de données de type LP-WAN, peuvent être respectivement mis en oeuvre par les premier équipement (3), second équipement (2) et réseau LP-WAN (7) illustrés par la Fig. 1.

Dans un ou plusieurs modes de réalisation, le premier équipement peut être configuré, par exemple au niveau applicatif, pour se comporter vis-à-vis du deuxième équipement comme un noeud relais. Par exemple, le premier équipement peut être un équipement terminal sans fil basse consommation d'un réseau de communication de données de type LP-WAN, c'est-à-dire être un équipement de noeud utilisateur d'un réseau de communication de données de type LP-WAN, mais être configuré, par exemple au niveau applicatif, pour émuler une ou plusieurs des fonctions d'un noeud relais du réseau de communication de données de type LP-WAN utilisée pour la mise en oeuvre d'un mode de réalisation d'un procédé proposé.

Dans un ou plusieurs modes de réalisation, le premier équipement peut être configuré pour recevoir (11a), par une couche applicative dudit premier équipement, un message de réveil en provenance du deuxième équipement.

Dans certains modes de réalisation, le premier équipement peut être configuré pour recevoir le message de réveil sur un canal de fréquences (ou plusieurs canaux de fréquences) défini(s) pour les communications sans fil entre le premier équipement et le deuxième équipement. Dans ces modes de réalisation, le message de réveil reçu du deuxième équipement peut ainsi aussi être un message de synchronisation entre le premier équipement et le deuxième équipement.

Dans un ou plusieurs modes de réalisation, la couche applicative du premier équipement peut en outre être configurée pour émettre (12a), vers le deuxième équipement, un message applicatif d'acquittement de réception du message de réveil, par exemple sur réception du message de réveil. Dans un ou plusieurs modes de réalisation dans lesquels le message reçu opère comme un message de réveil et de synchronisation, le message applicatif d'acquittement de réception du message de réveil et de synchronisation peut en outre opérer comme un message de synchronisation avec le deuxième équipement, en ce que le deuxième équipement peut transiter vers un état synchronisé avec le premier équipement sur réception de cet acquittement. Par exemple, le deuxième équipement peut considérer la réception de l'acquittement comme l'informant de l'accord du premier équipement pour des communications sans fil sur le canal de fréquences annoncé dans le message de réveil.

Dans un ou plusieurs modes de réalisation, la couche applicative du premier équipement peut en outre être configurée pour recevoir (13a), en provenance du deuxième équipement, un paquet de données, par exemple sur un canal de fréquences annoncé par le message de réveil, de manière synchronisée ou non en fonction du mode de réalisation.

Dans un ou plusieurs modes de réalisation, la couche applicative du premier équipement peut être configurée pour que le premier équipement opère comme un relais de transmission du paquet de données reçu en provenance du deuxième équipement. Ainsi, la couche applicative du premier équipement peut être configurée pour transférer (14a), vers un noeud du réseau de communication de données de type LP-WAN, des données du paquet de données insérées dans un message de transmission de données dans le sens montant d'un protocole de communication du réseau de communication de données de type LP-WAN. Par exemple, le paquet de données peut être relayé vers le réseau de communication de données de type LP-WAN en étant inséré dans un message de transmission de données dans le sens montant d'un protocole de communication du réseau de communication de données de type LP-WAN.

Dans un ou plusieurs modes de réalisation, la couche applicative du premier équipement peut être configurée pour transférer des données du paquet de données reçu en provenance du deuxième équipement vers un serveur applicatif, au travers du réseau de communication de données de type LP-WAN, par transfert de ces données vers un noeud du réseau LP-WAN.

Le premier équipement se comporte ainsi comme un relais applicatif configuré au sein d'un équipement terminal du réseau de communication de données de type LP-WAN, et est avantageusement capable de relayer les données reçues du deuxième équipement (2) vers un serveur applicatif en utilisant le réseau de communication de données de type LP-WAN. Le deuxième équipement n'étant pas un noeud du réseau de communication de données de type LP-WAN, aucun abonnement au réseau de communication de données de type LP-WAN n'est requis pour le deuxième équipement.

Cela permet avantageusement de définir deux modes de fonctionnement pour le deuxième équipement : Un premier mode de fonctionnement, dit nominal, dans lequel le second équipement n'utilise que les relais applicatifs de la flotte selon un ou plusieurs modes de réalisation de la présente divulgation, pour raison d'économie. La connectivité est alors opportuniste selon la proximité des relais "applicatifs" de la flotte. Un deuxième mode de fonctionnement, dit d'urgence : En cas d'urgence (par exemple lors d'un vol de véhicule embarquant un second équipement), un abonnement au réseau LP-WAN peut être utilisé de sorte que le second équipement puisse bénéficier pour ses communications de données de toute la couverture du réseau LPWAN public. Dans le mode urgence, le paquet de données du second équipement, qui peut être dans un contexte de réseau LoRaWAN conforme aux standards LoRa, peut également à tout moment être capté par le réseau LP-WAN dès lors que son utilisateur l'a abonné au réseau LPWAN pour bénéficier d'une couverture renforcée.

Ainsi, dans un ou plusieurs modes de réalisation, le premier équipement peut être configuré, au niveau de sa couche applicative, pour reproduire les opérations d'un relais de réseau de communication de données de type LP-WAN, en ce qu'il renvoie, et donc relaie, le paquet de données reçu du deuxième équipement vers le réseau de communication de données de type LP-WAN, alors que le premier équipement n'est, du point de vue du réseau de communication de données de type LP-WAN, qu'un équipement terminal de ce réseau.

Cela permet avantageusement de transmettre vers le réseau de communication de données de type LP-WAN, par exemple vers un serveur de ce réseau, des données issues du deuxième équipement, alors même que le deuxième équipement n'appartient pas, c'est-à-dire n'est pas un noeud du réseau de communication de données de type LP-WAN.

Ainsi, dans le cas de figure d'un réseau de communication de données de type LP-WAN opéré par un opérateur de réseau, des données en provenance d'un équipement qui n'est pas un noeud du réseau peuvent être obtenues par un équipement terminal du réseau, qui peut avantageusement être configuré pour relayer, par exemple au niveau applicatif, ces données vers un serveur du réseau.

Par exemple, dans un ou plusieurs modes de réalisation, un équipement terminal sans fil basse consommation d'un réseau LP-WAN peut être muni d'une application configurée pour mettre en oeuvre sous forme logicielle un procédé proposé dans la présente divulgation.

Dans un ou plusieurs modes de réalisation, le premier équipement peut en outre être configuré pour émettre, vers le deuxième équipement, un message de commande de configuration comprenant une commande de basculement dans un mode de fonctionnement de type-transpondeur. Par fonctionnement de type-transpondeur, on entend un mode opératoire dans lequel le premier équipement est configuré pour répondre automatiquement, par le biais d'un émetteur-récepteur radioélectrique du premier équipement, à un signal extérieur, par exemple en provenance d'un radar, d'un système de localisation, etc.

Ainsi, dans certains modes de réalisation, lorsqu'une communication de données a été effectuée entre les premier et deuxième équipements, le premier équipement peut piloter le deuxième équipement pour que le deuxième équipement bascule en mode de type transpondeur. Dans ces modes de réalisation, le deuxième équipement est ainsi configuré pour pouvoir basculer dans un mode de fonctionnement de type transpondeur, c'est-à-dire dans un mode de fonctionnement dans lequel il répond à des messages radiofréquence authentifiés par un « écho » radiofréquence dont le décalage avec la réception du premier est précis avec un ordre de précision correspondant à quelques mètres de propagation radio, permettant ainsi une évaluation précise de distance par l'émetteur à la façon d'un radar, et permettant ainsi une localisation du deuxième équipement totalement indépendante du réseau LPWAN, par mesures de distance successives.. Par exemple, un véhicule volé peut se situer hors de portée du réseau LPWAN avec un équipement du type 2. Il n'est pas localisable. Mais de manière aléatoire, un véhicule de la flotte muni d'un relais va détecter les messages de réveil du second équipement, puis relayer ses messages applicatifs. Le serveur applicatif du réseau, constatant qu'il s'agit d'un véhicule volé, peut alors activer le mode répondeur du second équipement. Dès lors, tout véhicule muni de la fonction émetteur de message de localisation peut retrouver le véhicule volé, même si ce dernier est volontairement caché hors de portée du réseau, s'il parvient au voisinage de ce dernier.

Des données peuvent alors être échangées entre le premier équipement et le deuxième équipement fonctionnant en mode radar. Dans un ou plusieurs modes de réalisation, ces données peuvent être avantageusement relayées vers un serveur de localisation, par exemple par le biais d'un ou plusieurs noeuds du réseau de communication de données de type LP-WAN, ce qui permet de localiser le deuxième équipement en utilisant les données échangées avec le premier équipement qui est un équipement terminal du réseau de communication de données de type LP-WAN.

Dans un ou plusieurs modes de réalisation, le procédé proposé peut avantageusement être utilisé pour réaliser une détection de proximité du deuxième équipement, lorsque le premier équipement, qui peut par exemple être embarqué sur un véhicule mobile, se trouve à proximité du deuxième équipement.

Par exemple, dans un ou plusieurs modes de réalisation, le premier équipement peut en outre être configuré pour effectuer une écoute de détection de signaux radio émis sur un ou plusieurs canaux de fréquences de réveil sur des périodes d'écoute, détecter une activité radio lors d'une période d'écoute parmi les périodes d'écoute, et basculer dans un mode de réception pour recevoir le message de réveil.

Dans ces modes de réalisation, le premier équipement peut ainsi être muni d'un dispositif d'émission/réception sans fil configuré pour effectuer une écoute de détection de signaux radio émis sur un ou plusieurs canaux de fréquences de réveil sur des périodes d'écoute, les canaux de fréquences de réveil étant préconfigurés sur le premier et le deuxième équipement de manière à permettre une synchronisation en fréquence des échanges de données entre le premier équipement et le deuxième équipement.

Le premier équipement et le deuxième équipement étant des équipements basse consommation, ils peuvent être configurés pour permettre une synchronisation temporelle des communications de données.

Par exemple, le premier équipement peut être configuré pour effectuer, par exemple périodiquement ou sensiblement périodiquement, une écoute de détection de signaux radio sur une période d'écoute prédéfinie potentiellement très courte (par exemple 1 ms toutes les 2 secondes), et le deuxième équipement peut être configuré pour émettre, par exemple périodiquement ou sensiblement périodiquement, un signal radio (portant des données, comme par exemple un préambule) sur le ou les canaux de fréquences de réveil pendant une période d'émission prédéfinie, typiquement choisie plus longue que la période d'écoute prédéfinie (par exemple 2.5 secondes).

Dans un ou plusieurs modes de réalisation, le premier équipement peut en outre être configuré pour, sur détection d'une activité radio lors d'une période d'écoute, basculer dans un mode de réception pour recevoir le message de réveil et mettre en oeuvre le procédé proposé dont un exemple de mode de réalisation est illustré par la Fig. 2a.

Dans un ou plusieurs modes de réalisation, l'utilisation d'un procédé proposé pour un cas d'usage de localisation du deuxième équipement ou de détection de proximité du deuxième équipement peut être enrichie en utilisant une liste d'équipements prédéfinie, et en déterminant, par exemple par la couche applicative du premier équipement, si le deuxième équipement correspond à un ou plusieurs équipements listés dans la liste d'équipements prédéfinie.

Dans certains modes de réalisation, lorsqu'il est déterminé que le deuxième équipement correspond à un ou plusieurs équipements listés dans la liste d'équipements prédéfinie, le premier équipement peut piloter le deuxième équipement afin que le deuxième équipement bascule dans un mode de fonctionnement (par exemple de type transpondeur) permettant de le localiser géographiquement.

A l'inverse, dans certains modes de réalisation, lorsqu'il est déterminé que le deuxième équipement ne correspond à aucun des équipements listés dans la liste d'équipements prédéfinie, le premier équipement peut interrompre les opérations visant à piloter le deuxième équipement, par exemple pour le localiser géographiquement.

La figure 2b illustre un exemple non limitatif de mise en oeuvre (10b) par le deuxième équipement d'un procédé proposé selon un ou plusieurs modes de réalisation.

En référence à la figure 2b, on considère un premier équipement et un deuxième équipement, le premier équipement étant un équipement terminal sans fil basse consommation d'un réseau de communication de données de type LP-WAN, et le deuxième équipement étant un équipement sans fil basse consommation n'appartenant pas au réseau de communication de données de type LP-WAN. Par exemple, le premier équipement, le deuxième équipement, et le réseau de communication de données de type LP-WAN, peuvent être respectivement mis en oeuvre par les premier équipement (3), second équipement (2) et réseau LP-WAN (7) illustrés par la Fig. 1.

Dans un ou plusieurs modes de réalisation, le deuxième équipement peut être configuré pour émettre (11b), vers une couche applicative du premier équipement, un message de réveil. Dans certains modes de réalisation, le deuxième équipement peut être configuré pour émettre le message de réveil sur un canal de fréquences (ou plusieurs canaux de fréquences) défini(s) pour les communications sans fil entre le premier équipement et le deuxième équipement. Le message de réveil émis par le deuxième équipement peut ainsi opérer aussi un message de demande de synchronisation entre le premier équipement et le deuxième équipement.

Dans un ou plusieurs modes de réalisation, le deuxième équipement peut en outre être configuré pour recevoir (12b), en provenance de la couche applicative du premier équipement, un message d'acquittement de réception du message de réveil. Dans un ou plusieurs modes de réalisation dans lesquels le message transmis opère comme un message de réveil et de synchronisation, le message applicatif d'acquittement de réception du message de réveil reçu par le deuxième équipement peut en outre opérer comme un message de synchronisation avec le deuxième équipement, en ce que le deuxième équipement peut transiter vers un état synchronisé avec le premier équipement sur réception de cet acquittement. Par exemple, le deuxième équipement peut considérer la réception de l'acquittement comme l'informant de l'accord du premier équipement pour des communications sans fil sur le canal de fréquences annoncé dans le message de réveil. Dans un ou plusieurs modes de réalisation, le deuxième équipement peut en outre être configuré pour émettre (13b), vers la couche applicative du premier équipement, un paquet de données, par exemple sur un canal de fréquences annoncé par le message de réveil.

Dans un ou plusieurs modes de réalisation, le deuxième équipement peut être configuré pour se comporter, vis-à-vis des fonctions de relais émulées par le premier équipement, comme un équipement terminal du réseau de communication de données de type LP-WAN, sans qu'il soit toutefois un noeud de ce réseau. Cela permet avantageusement d'échanger des données avec le deuxième équipement sans qu'un abonnement opérateur pour le deuxième équipement soit nécessaire dans les cas de figure où le réseau de communication de données de type LP-WAN est un réseau opéré.

Ainsi, il est possible d'envisager des cas d'usage d'un procédé proposé dans lesquels un grand nombre d'équipements correspondant pour la mise en oeuvre d'un mode de réalisation d'un procédé proposé est déployé, en permettant par exemple une détection de proximité ou une localisation de chacun de ces équipements par mise en oeuvre d'un mode de réalisation d'un procédé proposé.

Par exemple, le deuxième équipement peut être mis en oeuvre au sein d'un traqueur (en anglais, « tracker »), installé sur un véhicule (comme par exemple une bicyclette, une trottinette, une automobile, etc.) afin de géolocaliser le véhicule en cas de vol.

Dans les modes de réalisation dans lesquels le deuxième équipement est un traqueur embarqué sur un véhicule, le procédé proposé peut avantageusement être utilisé en cas de vol du véhicule, notamment lorsque le véhicule volé est conservé dans un endroit peu accessibles aux signaux radiofréquences, comme par exemple un sous-sol, dans lequel une localisation par GPS (de l'anglais « Global Positioning System ») (ou tout autre système de localisation par satellites) ou par signaux radiofréquences (par exemple des signaux WiFi (de l'anglais Wireless Fidelity)) ne peut être utilisée. Dans ce cas de figure, le premier équipement peut avantageusement être embarqué sur un véhicule qui circule dans des endroits cibles afin de détecter le traqueur lorsque celui-ci se trouve à proximité.

La figure 2c illustre un exemple non limitatif de mise en oeuvre (10c) par un serveur informatique (par exemple un serveur de localisation) d'un procédé proposé selon un ou plusieurs modes de réalisation.

En référence à la figure 2c, on considère un serveur informatique configuré pour recevoir des données en provenance d'un réseau de communication de données de type LP-WAN, par exemple le réseau LP-WAN (7) illustré par la Fig. 1. Par exemple, le serveur informatique peut être mis en oeuvre par le serveur de réseau (6) illustré par la Fig. 1, ou par tout serveur informatique connecté pour l'échange de données avec les noeuds du réseau LP-WAN (7), par exemple par le biais du serveur de réseau (6).

Dans un ou plusieurs modes de réalisation, le serveur informatique peut être configuré pour obtenir (11c) des informations de localisation d'un premier équipement, le premier équipement étant un équipement terminal sans fil basse consommation du réseau de communication de données de type LP-WAN.

Selon le mode de réalisation, le premier équipement étant un équipement terminal du réseau LP-WAN, les données de localisation pourront être calculées par le serveur informatique à partir de données reçues par le serveur informatique, ou être reçues, par exemple en provenance du premier équipement, par le serveur informatique.

Dans un ou plusieurs modes de réalisation, le serveur informatique pourra en outre être configuré pour recevoir (12c), en provenance du premier équipement, un paquet de données comprenant un identifiant d'un deuxième équipement, le deuxième équipement étant un équipement sans fil basse consommation n'appartenant pas au réseau de communication de données de type LP-WAN.

Par exemple, dans certains modes de réalisation, des données d'identification d'un deuxième équipement sans fil basse consommation qui n'est pas un noeud du réseau de communication de données LP-WAN (et en particulier pas un équipement terminal du réseau de communication de données LP-WAN), peuvent avoir été obtenues par le premier équipement en mettant en oeuvre un mode de réalisation du procédé proposé pour le premier équipement.

Dans un ou plusieurs modes de réalisation, le serveur informatique peut en outre être configuré pour déterminer (13c) une information de localisation du deuxième équipement sur la base des informations de localisation du premier équipement.

Par exemple, le serveur informatique peut être configuré pour, une fois le deuxième équipement identifié, déterminer une localisation du deuxième équipement à partir de la localisation obtenue pour le premier équipement. Cette détermination peut par exemple tirer avantage du fait que les premier et deuxième équipements sont des équipements basse consommation pour lesquels les procédés proposés peuvent être utilisés pour une détection de proximité du deuxième équipement par le premier équipement.

Dans un ou plusieurs modes de réalisation, le serveur informatique peut être configuré pour en outre émettre, vers le premier équipement, une commande de pilotage pour requérir l'émission, par le premier équipement, vers le deuxième équipement, d'un message de commande de configuration comprenant une commande de basculement dans un mode de fonctionnement de type radar.

Le pilotage du deuxième équipement par le premier équipement peut ainsi être effectué sous le contrôle du serveur informatique, notamment pour tenir compte du fait que dans un ou plusieurs modes de réalisation, le serveur informatique peut être configuré pour contrôler une flotte d'une pluralité de premiers équipements déployés, et/ou pour gérer une base de données de deuxièmes équipements dont certains sont identifiés comme devant être localisés.

Dans ces modes de réalisation, le premier équipement peut être configuré pour relayer des données échangées avec le deuxième équipement en mode radar, le cas échéant, et le serveur informatique peut de manière correspondante être configuré pour recevoir, en provenance du premier équipement, des données échangées avec le deuxième équipement en mode radar.

Le serveur informatique peut en outre être configuré, dans certains modes de réalisation, pour déterminer une localisation fine du deuxième équipement sur la base des données échangées par le premier équipement avec le deuxième équipement en mode radar.

Une localisation fine du deuxième équipement peut ainsi être obtenue suite à une détection de proximité du deuxième équipement par le premier équipement, sur la base des données fournies par le premier équipement au serveur informatique.

La figure 3 montre un diagramme illustrant un exemple non limitatif d'échanges de message entre un premier équipement et un deuxième équipement, selon un procédé proposé selon un ou plusieurs modes de réalisation.

En référence à la figure 3, on considère un premier équipement (3) et un deuxième équipement (2), le premier équipement (3) étant un équipement terminal sans fil basse consommation d'un réseau de communication de données de type LP-WAN (7), et le deuxième équipement (2) étant un équipement sans fil basse consommation n'appartenant pas au réseau de communication de données de type LP-WAN (7). Par exemple, le premier équipement, le deuxième équipement, et le réseau de communication de données de type LP-WAN, peuvent être respectivement mis en oeuvre par les premier équipement (3), second équipement (2) et réseau LP-WAN (7) illustrés par la Fig. 1.

En particulier, le premier équipement (3) peut être un équipement terminal d'un réseau LoRaWAN (7) utilisé pour effectuer une détection de proximité du deuxième équipement (2) selon un procédé de la présente divulgation.

Dans un ou plusieurs modes de réalisation, le premier équipement (3) peut être configuré, par exemple au niveau applicatif, pour se comporter vis-à-vis du deuxième équipement (2) comme un noeud relais, ce quand bien même le deuxième équipement (2) n'est pas un noeud du réseau LoRaWAN (7). Par exemple, le premier équipement peut être un équipement terminal du réseau LoRaWAN (7) qui n'est pas un noeud relais du réseau LoRaWAN (7), mais est configuré, non pas au niveau des couches basses du modèle OSI (comme le serait un noeud relais LoRaWAN (7)), mais au niveau des couches hautes du modèle OSI, par exemple au niveau applicatif, pour émuler une ou plusieurs des fonctions d'un noeud relais du réseau LoRaWAN (7), et utiliser ces fonctions pour la mise en oeuvre d'un mode de réalisation d'un procédé proposé dans la présente divulgation. Dans un ou plusieurs modes de réalisation, l'émission et la réception de messages pour la mise en oeuvre au niveau applicatif de fonctions de noeud de relais du réseau LoRaWAN (7) peut utiliser un mécanisme d'encapsulation de commandes MAC (« MAC commands ») échangées par les noeuds du réseau LoRaWAN (7) au sein de messages applicatifs.

Dans un ou plusieurs modes de réalisation, le deuxième équipement (2) peut être configuré, par exemple au niveau applicatif, pour émettre sur l'interface air un message de réveil du type le message « Wake-On-Radio » ou « WOR », par exemple en diffusant ce message afin de pouvoir être détecté par un équipement de détection se trouvant à proximité. Le message de réveil WOR peut être diffusé sur un canal de fréquences parmi un ou plusieurs canaux de fréquences configurés pour les communications sans fil impliquant les premier et deuxième équipements. Dans un ou plusieurs modes de réalisation, le message de réveil WOR diffusé par le second équipement (2) peut être conforme à la spécification LoRaWAN, et notamment comprendre des données d'annonce d'un canal de fréquences pour l'envoi de données à un noeud relais LoRaWAN. Ainsi, quand bien même le deuxième équipement (2) n'est pas un noeud du réseau LoRaWAN (7), cet équipement peut être configuré pour réutiliser, mais au niveau applicatif et non pas au niveau MAC, certains messages utilisés par les noeuds du réseau LoRaWAN (7), et pour se comporter, vis-à-vis des fonctions relais LoRaWAN mises en oeuvre par le premier équipement, comme un noeud découvrable par un noeud relais. Dans un ou plusieurs modes de réalisation, l'émission et la réception de messages pour la mise en oeuvre au niveau applicatif de l'échange de messages de noeud de réseau LoRaWAN (7) peut utiliser un mécanisme d'encapsulation de commandes MAC (« MAC commands ») échangées par les noeuds du réseau LoRaWAN (7) au sein de messages applicatifs.

Sur la Fig. 3, les références (2) et (3) désignent ainsi respectivement, dans un ou plusieurs modes de réalisation, la couche applicative du deuxième équipement (« APP EQP2 ») et la couche applicative du premier équipement (« APP EQP1 »).

En référence à la Fig. 3, dans un ou plusieurs modes de réalisation, le premier équipement peut être configuré pour diffuser un message applicatif dont la charge utile comprend un message LoRaWAN de type WOR, par exemple tel que spécifié à la section 3.2 de la spécification « LoRaWAN Relay Spécification TS011-1.0.0 ». Le premier équipement (3) peut recevoir le message WOR applicatif diffusé, par exemple lorsqu'il se trouve suffisamment proche du deuxième équipement (2) pour être sous la couverture radio de l'émission du message WOR applicatif.

Dans un ou plusieurs modes de réalisation, sur réception du message WOR applicatif, le premier équipement (3) peut générer un message applicatif d'accusé de réception (WOR Ack) sur la base des informations comprises dans le message WOR applicatif reçu, et transmettre ce message applicatif d'accusé de réception vers le deuxième équipement (2).

Dans un ou plusieurs modes de réalisation, le deuxième équipement (2), initialement dans un état non-synchronisé avec le réseau LoRaWAN (7), transite vers un état synchronisé sur réception du message applicatif d'accusé de réception, état dans lequel il peut émettre des messages sur le canal de fréquences annoncé dans son message de réveil WOR.

Dans un ou plusieurs modes de réalisation, sur réception du message applicatif d'accusé de réception, le deuxième équipement (2) peut générer puis émettre, sur le canal de fréquences annoncé par le message de réveil WOR, un paquet de données inséré dans un message de transmission de données dans le sens montant de protocole LoRaWAN, comme par exemple un message « LoRaWAN class A uplink ». Afin d'être transmis au niveau applicatif, le message « LoRaWAN class A uplink » peut être encapsulé dans un message applicatif. Le paquet de données peut par exemple être configuré pour permettre de détecter la présence à proximité du deuxième équipement (2), en particulier lorsque le deuxième équipement (2) est considéré perdu.

Dans un ou plusieurs modes de réalisation, sur réception du message de transmission de données « LoRaWAN class A uplink », le premier équipement (3), fonctionnant en mode relais au niveau applicatif vis-à-vis de ce message reçu, génère un message applicatif comprenant une trame de relais de réseau LoRaWAN de transmission dans le sens montant « Relay class A uplink» comprenant des données reçues du deuxième équipement, puis transmet cette trame de relais de réseau encapsulée dans le message applicatif vers un serveur applicatif (6) d'un réseau de communication de données (éventuellement au travers d'un ou plusieurs noeuds du réseau LoRaWAN (7)), qui pourra être configuré pour traitement de ces données selon le cas d'usage envisagé. Le premier équipement (3) transfère ainsi des données reçues du deuxième équipement (2) vers le serveur applicatif (6).

La figure 4a illustre schématiquement un exemple de premier équipement configuré pour la mise en oeuvre d'un mode de réalisation d'un procédé proposé dans un ou plusieurs modes de réalisation.

Comme illustré sur la figure 4a, le premier équipement (100a) peut comprendre une unité radiofréquence (RF) (101 a), un contrôleur (102a), une mémoire (103a), une unité d'alimentation électrique (105a) et une unité de communication (104a). Selon le mode de réalisation, l'unité radiofréquence (RF) (101a), la mémoire (103a), l'unité d'alimentation électrique (105a) et unité de communication (104a) peuvent être couplées de manière opérationnelle au contrôleur (102a) par un bus de communication (106a), ou par tout lien de communication, comprenant éventuellement un ou plusieurs connecteurs matériels. Dans l'exemple d'architecture du premier équipement (1 00a) illustré sur la figure 4a, l'ensemble des unité radiofréquence (RF) (101a), contrôleur (102a), mémoire (103a), système d'exploitation (104a), unité d'alimentation électrique (105a) et unité de communication (104a) forme un premier équipement, qui peut par ailleurs inclure d'autres composants, unités, fonctions, non représentés sur la figure.

Le contrôleur (102a) peut comprendre un ou plusieurs processeurs, comme une unité centrale (CPU) ou un autre processeur matériel, une mémoire associée (par exemple, une mémoire vive (RAM), une mémoire cache, une mémoire flash, etc.), et être apte à être configuré pour piloter l'unité radiofréquence (RF) (101a), la mémoire (103a), l'unité d'alimentation électrique (105a) et l'unité de communication (104a), afin de commander l'utilisation du premier équipement (100a) selon un ou plusieurs modes de réalisation d'un procédé proposé, par exemple en exécutant un programme d'ordinateur comprenant des portions de code pour la mise en oeuvre d'un procédé tel que proposé dans la présente description. En fonction du mode de réalisation, la mémoire (103a) et/ou une mémoire associé du contrôleur (102a) contiennent des instructions qui, lorsqu'elles sont exécutées par le contrôleur (102a), amènent ce contrôleur (102a) à effectuer ou contrôler les parties unité RF (101a) et unité de communication (104a) pour réaliser des exemples de mise en oeuvre d'un mode de réalisation d'un procédé proposé décrits dans la présente description. Le contrôleur (102a) peut être un composant implémentant un processeur ou une unité de calcul pour le pilotage d'un premier équipement selon le procédé proposé et le contrôle de l'unité de communication (104a) du dispositif (100a), comme par exemple un microcontrôleur.

La mémoire (103a) comprend de préférence une mémoire non volatile, par exemple de type flash, et en fonction du mode de réalisation choisi, peut être mise en oeuvre sous la forme d'un ou plusieurs composants mémoire montés sur une carte électronique, sous la forme d'un ou plusieurs circuits électronique intégrés à un composant électronique du premier équipement, sous la forme ou intégrée à un dispositif autonome ne comprenant pas nécessairement d'autres éléments du premier équipement, comme par exemple sous la forme d'une carte mémoire (carte mémoire SD (de l'anglais Secure Digital), micro SD (de l'anglais Micro Secure Digital *Card*)*,* SD de Haute Capacité (SDHC, de l'anglais Secure Digital High Capacity), SD de capacité étendue (SDXC, de l'anglais Secure Digital eXtended Capacity).

L'unité de communication (104a) peut être mise en oeuvre, selon le mode de réalisation choisi, sous la forme d'un ou plusieurs logiciel(s), ou d'une combinaison de matériel(s) et de logiciel(s), configurés pour la mise en oeuvre de modes de réalisation du procédé décrit dans la présente description. L'unité de communication (104a) peut être configurée pour mettre en oeuvre une couche logicielle applicative, pour la mise en oeuvre d'un mode de réalisation d'un procédé proposé par le premier équipement par une ou plusieurs applications. L'unité de communication (104a) peut par ailleurs constituer ou faire partie d'un logiciel applicatif de communication du premier équipement. Dans la suite, on désignera par « logiciel de communication » un ensemble d'un ou plusieurs logiciels applicatifs configurés pour la mise en oeuvre d'un procédé proposé dans la présente description. En fonction de l'architecture du premier équipement, le logiciel de communication est configuré pour être exécutable sur un processeur du premier équipement, et/ou sur un processeur d'un équipement électronique auquel une partie du premier équipement (comprenant la mémoire (103a)) est connectée.

Dans un ou plusieurs modes de réalisation, l'unité de communication (104a) pourra être configurée pour piloter, par l'intermédiaire du contrôleur (102a), l'unité RF (101a) pour émettre et recevoir des signaux radiofréquence pour la mise en oeuvre d'un mode de réalisation d'un procédé proposé pour le premier équipement.

L'unité RF (101a) peut être mise en oeuvre, selon le mode de réalisation choisi, sous la forme d'un ou plusieurs logiciel(s), ou d'une combinaison de matériel(s) et de logiciel(s), configurés pour la mise en oeuvre de modes de réalisation du procédé décrit dans la présente description. L'unité RF (101a) peut être configurée pour émettre et recevoir des signaux radiofréquence, par exemple dans une bande de fréquences et selon un format prédéfini pour des signaux radiofréquences utilisés par les noeuds d'un réseau de communication de données de type LP-WAN. Par exemple, l'unité RF (101a) peut être configurée pour émettre et/ou recevoir des signaux radiofréquences conformes aux spécifications des réseaux LoRaWAN. Par ailleurs, l'unité RF (101a) pourra être configurée pour émettre des signaux radiofréquences avec une puissance d'émission compatible avec une contrainte de basse consommation imposée sur le premier équipement.

L'unité d'alimentation électrique (105a) peut être mise en oeuvre, selon le mode de réalisation choisi, sous la forme d'un ou plusieurs logiciel(s), ou d'une combinaison de matériel(s) et de logiciel(s), pour piloter l'alimentation électrique du premier dispositif, qui pourra utiliser une alimentation par pile(s), le premier équipement étant un équipement basse consommation.

Le premier équipement (100a) peut être mis en oeuvre sous forme logicielle, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). Les SOC (*System On Chip*) ou système sur puce sont des systèmes embarqués qui intègrent tous les composants d'un système électronique dans une puce unique. Un *ASIC* (*Application-specific Integrated Circuit*) est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type *FPGA* (*Field-Programmable Gate Array*) sont des circuits électroniques reconfigurables par l'utilisateur.

Le premier équipement (100a) peut également utiliser des architectures hybrides, comme par exemple des architectures basées sur un CPU+FPGA, un GPU (*Graphics Processing Unit*) ou un MPPA (*Multi-Purpose Processor Array*)*.*

En fonction du mode de réalisation, différentes architectures du premier équipement (100a) peuvent être adoptées, tant pour la partie matérielle du premier équipement, que pour la partie logicielle du premier équipement le cas échéant.

Par exemple, dans un mode de réalisation, l'ensemble des éléments formant le premier équipement (cet ensemble comprenant, sur l'exemple de la figure 4a, l'unité radiofréquence (RF) (101a), le contrôleur (102a), la mémoire (103a), l'unité d'alimentation électrique (105a) et l'unité de communication (104a)) peut être regroupé dans un même équipement, appareil ou dispositif, comme par exemple un équipement de type traqueur pour véhicule.

Dans un autre mode de réalisation, certains au moins des éléments formant le premier équipement peuvent être distribués sur plusieurs équipements, appareils ou dispositifs.

Dans un ou plusieurs modes de réalisation, l'unité de communication (104a) du premier équipement peut être mise en oeuvre sous forme d'un logiciel (un programme d'ordinateur, comprenant des instructions sous la forme de code logiciel - code source, objet et/ou code exécutable, exécutable par un processeur auquel la mémoire (103a) (par exemple une carte SD) est connectée), éventuellement intégré à un logiciel pilote du premier équipement.

Dans un ou plusieurs modes de réalisation, le premier équipement (100a) est configuré pour mettre en oeuvre un noeud d'extrémité de réseau de type LoRaWAN. Par exemple, l'unité de communication (104a) peut être configurée pour mettre en oeuvre des fonctions de communication de noeud d'extrémité telles que spécifiés par le standard LoRaWAN, et mettre en oeuvre, par une couche applicative, les opérations des différents modes de réalisation d'un procédé proposé pour le premier équipement. Par exemple, l'unité de communication (104a) peut être configurée pour mettre en oeuvre des fonctions de communication de noeud d'extrémité telles que spécifiés par le standard LoRaWAN, et en outre mettre en oeuvre, par une couche applicative, des fonctions de noeud relais de réseau LoRaWAN, en utilisant un mécanisme de tunneling vers un serveur applicatif de messages définis pour un noeud relais par le standard LoRaWAN.

L'homme du métier comprendra que le procédé de communication proposé pour le premier équipement n'est pas limité à une architecture particulière du premier équipement, et qu'il peut être mis en oeuvre sur des dispositifs ayant une architecture différente de celles présentées ci-dessus, par exemple en ce qu'elle combine les architectures présentées ci-dessus au sein d'une architecture hybride.

La figure 4b illustre schématiquement un exemple de deuxième équipement configuré pour la mise en oeuvre d'un mode de réalisation d'un procédé proposé dans un ou plusieurs modes de réalisation.

Comme illustré sur la figure 4b, le deuxième équipement (100b) peut comprendre une unité radiofréquence (RF) (101b), un contrôleur (102b), une mémoire (103b), une unité d'alimentation électrique (105b) et une unité de communication (104b). Selon le mode de réalisation, l'unité radiofréquence (RF) (101b), la mémoire (103b), l'unité d'alimentation électrique (105b) et unité de communication (104b) peuvent être couplées de manière opérationnelle au contrôleur (102b) par un bus de communication (106b), ou par tout lien de communication, comprenant éventuellement un ou plusieurs connecteurs matériels. Dans l'exemple d'architecture du premier équipement (100b) illustré sur la figure 4b, l'ensemble des unité radiofréquence (RF) (101b), contrôleur (102b), mémoire (103b), système d'exploitation (104b), unité d'alimentation électrique (105b) et unité de communication (104b) forme un deuxième équipement, qui peut par ailleurs inclure d'autres composants, unités, fonctions, non représentés sur la figure.

Le contrôleur (102b) peut comprendre un ou plusieurs processeurs, comme une unité centrale (CPU) ou un autre processeur matériel, une mémoire associée (par exemple, une mémoire vive (RAM), une mémoire cache, une mémoire flash, etc.), et être apte à être configuré pour piloter l'unité radiofréquence (RF) (101b), la mémoire (103b), l'unité d'alimentation électrique (105b) et l'unité de communication (104b), afin de commander l'utilisation du premier équipement (100b) selon un ou plusieurs modes de réalisation d'un procédé proposé, par exemple en exécutant un programme d'ordinateur comprenant des portions de code pour la mise en oeuvre d'un procédé tel que proposé dans la présente description. En fonction du mode de réalisation, la mémoire (103b) et/ou une mémoire associé du contrôleur (102b) contiennent des instructions qui, lorsqu'elles sont exécutées par le contrôleur (102b), amènent ce contrôleur (102b) à effectuer ou contrôler les parties unité RF (101b) et unité de communication (104b) pour réaliser des exemples de mise en oeuvre d'un mode de réalisation d'un procédé proposé décrits dans la présente description. Le contrôleur (102b) peut être un composant implémentant un processeur ou une unité de calcul pour le pilotage d'un premier équipement selon le procédé proposé et le contrôle de l'unité de communication (104b) du dispositif (100b), comme par exemple un microcontrôleur.

La mémoire (103b) comprend de préférence une mémoire non volatile, par exemple de type flash, et en fonction du mode de réalisation choisi, peut être mise en oeuvre sous la forme d'un ou plusieurs composants mémoire montés sur une carte électronique, sous la forme d'un ou plusieurs circuits électronique intégrés à un composant électronique du premier équipement, sous la forme ou intégrée à un dispositif autonome ne comprenant pas nécessairement d'autres éléments du premier équipement, comme par exemple sous la forme d'une carte mémoire (carte mémoire SD (de l'anglais Secure Digital), micro SD (de l'anglais Micro Secure Digital *Card),* SD de Haute Capacité (SDHC, de l'anglais Secure Digital High Capacity), SD de capacité étendue (SDXC, de l'anglais Secure Digital eXtended Capacity).

L'unité de communication (104b) peut être mise en oeuvre, selon le mode de réalisation choisi, sous la forme d'un ou plusieurs logiciel(s), ou d'une combinaison de matériel(s) et de logiciel(s), configurés pour la mise en oeuvre de modes de réalisation du procédé décrit dans la présente description. L'unité de communication (104b) peut être configurée pour la mise en oeuvre d'un mode de réalisation d'un procédé proposé dans la présente divulgation par le deuxième équipement, par exemple par une ou plusieurs applications. L'unité de communication (104b) peut par ailleurs constituer ou faire partie d'un logiciel, par exemple applicatif, de communication du deuxième équipement. En fonction de l'architecture du deuxième équipement, le logiciel de communication est configuré pour être exécutable sur un processeur du deuxième équipement, et/ou sur un processeur d'un équipement électronique auquel une partie du deuxième équipement (comprenant la mémoire (103b)) est connectée.

Dans un ou plusieurs modes de réalisation, l'unité de communication (104b) pourra être configurée pour piloter, par l'intermédiaire du contrôleur (102b), l'unité RF (101b) pour émettre et recevoir des signaux radiofréquence pour la mise en oeuvre d'un mode de réalisation d'un procédé proposé pour le deuxième équipement.

L'unité RF (101b) peut être mise en oeuvre, selon le mode de réalisation choisi, sous la forme d'un ou plusieurs logiciel(s), ou d'une combinaison de matériel(s) et de logiciel(s), configurés pour la mise en oeuvre de modes de réalisation du procédé décrit dans la présente divulgation. L'unité RF (101b) peut être configurée pour émettre et recevoir des signaux radiofréquences, par exemple dans une bande de fréquences et selon un format prédéfini pour des signaux radiofréquences utilisés par les noeuds d'un réseau de communication de données de type LP-WAN. Par exemple, l'unité RF (101b) peut être configurée pour émettre et/ou recevoir des signaux radiofréquences conformes aux spécifications des réseaux LoRaWAN. Par ailleurs, l'unité RF (101b) pourra être configurée pour émettre des signaux radiofréquences avec une puissance d'émission compatible avec une contrainte de basse consommation imposée sur le deuxième équipement.

L'unité d'alimentation électrique (105b) peut être mise en oeuvre, selon le mode de réalisation choisi, sous la forme d'un ou plusieurs logiciel(s), ou d'une combinaison de matériel(s) et de logiciel(s), pour piloter l'alimentation électrique du deuxième dispositif, qui pourra utiliser une alimentation par pile(s), le deuxième équipement étant un équipement basse consommation.

Le deuxième équipement (100b) peut être mis en oeuvre sous forme logicielle, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). Les SOC (*System On Chip*) ou système sur puce sont des systèmes embarqués qui intègrent tous les composants d'un système électronique dans une puce unique. Un *ASIC* (*Application-specific Integrated Circuit*) est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type *FPGA (Field-Programmable Gate Array)* sont des circuits électroniques reconfigurables par l'utilisateur.

Le deuxième équipement (100b) peut également utiliser des architectures hybrides, comme par exemple des architectures basées sur un CPU+FPGA, un GPU (*Graphics Processing Unit*) ou un MPPA (*Multi-Purpose Processor Array*)*.*

En fonction du mode de réalisation, différentes architectures du deuxième équipement (100b) peuvent être adoptées, tant pour la partie matérielle du deuxième équipement, que pour la partie logicielle du deuxième équipement le cas échéant.

Par exemple, dans un mode de réalisation, l'ensemble des éléments formant le deuxième équipement (cet ensemble comprenant, sur l'exemple de la figure 4b, l'unité radiofréquence (RF) (101b), le contrôleur (102b), la mémoire (103b), l'unité d'alimentation électrique (105b) et l'unité de communication (104b)) peut être regroupé dans un même équipement, appareil ou dispositif, comme par exemple un équipement de type traqueur découvrable à connectivité opportuniste.

Dans un autre mode de réalisation, certains au moins des éléments formant le deuxième équipement peuvent être distribués sur plusieurs équipements, appareils ou dispositifs.

Dans un ou plusieurs modes de réalisation, l'unité de communication (104b) du deuxième équipement peut être mise en oeuvre sous forme d'un logiciel (un programme d'ordinateur, comprenant des instructions sous la forme de code logiciel - code source, objet et/ou code exécutable, exécutable par un processeur auquel la mémoire (103b) (par exemple une carte SD) est connectée), éventuellement intégré à un logiciel pilote du premier équipement.

Dans un ou plusieurs modes de réalisation, le deuxième équipement (100b) est configuré pour mettre en oeuvre un procédé comprenant : émettre, vers le premier équipement, un message de réveil sur un canal de fréquences défini pour les communications sans fil entre le premier équipement et le deuxième équipement ; recevoir, en provenance du premier équipement, un message d'acquittement de réception du message de réveil ; et émettre, vers le premier équipement, un paquet de données sur le canal de fréquences annoncé par le message de réveil.

L'homme du métier comprendra que le procédé de communication proposé pour le deuxième équipement n'est pas limité à une architecture particulière du deuxième équipement, et qu'il peut être mis en oeuvre sur des dispositifs ayant une architecture différente de celles présentées ci-dessus, par exemple en ce qu'elle combine les architectures présentées ci-dessus au sein d'une architecture hybride.

### Cas d'usage

Les procédés proposés dans la présente divulgation peuvent être utilisé dans le contexte de cas d'usage variés, tel que, par exemple, le cas d'usage de localisation d'un véhicule volé lorsque ce véhicule est équipé d'un équipement de découverte (en anglais, « discoverable node ») correspondant au deuxième équipement.

Selon un exemple particulier de mise en oeuvre de ce cas d'usage, on peut envisager un premier équipement utilisé comme traqueur (en anglais, « tracker ») configuré pour opérer dans un réseau public de type LoRaWAN. Le réseau LoRaWAN étant public, le premier équipement est donc configuré pour fonctionner dans le réseau LoRaWAN comme un équipement terminal LoRaWAN, et est de plus associé à un abonnement d'équipement terminal du réseau LoRaWAN.

Le deuxième équipement est un équipement basse consommation configuré pour la mise en oeuvre d'un ou plusieurs modes de réalisation des procédés proposés dans la présente divulgation, et peut être embarqué, de préférence de manière dissimulée, sur un véhicule afin de permettre la localisation du véhicule en cas de vol.

Dans le cas d'un vol du véhicule équipé du deuxième équipement, il peut arriver que le véhicule soit amené dans un lieu jugé sûr par les voleurs, en ce que les moyens habituels de localisation (notamment pas GPS) du véhicule ne pourront fonctionner. Il peut s'agir d'un endroit où il n'y a par exemple aucune couverture WiFi, et où la localisation par GPS est inopérante.

Le deuxième équipement (embarqué sur le véhicule volé) peut être configuré pour émettre, par exemple à intervalles réguliers, et sur un ou plusieurs canaux de fréquences prédéfinis, un signal radiofréquence portant un message de réveil selon un protocole de communication prédéfini entre le premier équipement et le deuxième équipement.

Le premier équipement peut lui aussi être embarqué sur un véhicule traqueur qui est déplacé pour effectuer une détection de proximité du deuxième équipement. Le premier équipement peut par ailleurs être configuré avec une application logicielle, par exemple dite de traque, configurée pour la mise en oeuvre d'un mode de réalisation d'un procédé proposé pour le premier équipement. L'application de traque peut être activée sur le premier équipement lorsque le cas d'usage de détection de proximité est mis en oeuvre.

Lorsque le premier équipement se trouve dans une zone de couverture radio des émissions radiofréquences du deuxième équipement, il est en situation de recevoir un message de réveil émis par le deuxième équipement.

La réception de ce message de réveil permet au premier équipement (ou à un utilisateur du premier équipement) de déterminer que la présence à proximité du deuxième équipement a été détectée, et de se synchroniser pour échanger des données avec le deuxième équipement.

Le premier équipement peut aussi n'effectuer que des traitements du message de réveil reçu visant à se synchroniser avec le deuxième équipement pour échanger des données avec cet équipement.

Par exemple, le premier équipement peut émettre, vers le deuxième équipement, par exemple un le ou les canaux de fréquences prédéfinis, un signal radiofréquence portant un message d'acquittement de réception du message de réveil, par exemple selon le protocole de communication prédéfini entre le premier équipement et le deuxième équipement.

L'application de trace du premier équipement pourra être configurée pour émuler, vis-à-vis du deuxième équipement, un noeud relais du réseau LoRaWAN, alors même que le deuxième équipement n'est pas un équipement terminal du réseau LoRaWAN et que le premier équipement est, vu du réseau LoRaWAN, simplement un équipement terminal et non pas un noeud relais LoRaWAN. Par exemple, le premier équipement peut être configuré pour, sur réception d'un paquet de données en provenance du deuxième équipement, relayer ce paquet de données en le transmettant à un serveur applicatif dans un message de transmission de données dans le sens montant d'un protocole du réseau LoRaWAN.

Ainsi, le premier équipement peut être configuré, par le biais de son application de trace, pour relayer des données reçues du deuxième équipement vers un serveur applicatif connecté au réseau LoRaWAN, en encapsulant les données reçues dans un message de transmission de données d'un équipement terminal LoRaWAN vers le réseau LoRaWAN, par exemple dans la charge utile du message de transmission de données. Un mécanisme de tunnel peut ainsi être utilisé pour relayer des données reçues du deuxième équipement vers le serveur applicatif, par le biais du réseau LoRaWAN.

Les données reçues par le premier équipement en provenance du deuxième équipement peuvent comprendre un identifiant du deuxième équipement, par exemple un identifiant universel de type UUID, qui peut ensuite être relayé par le premier équipement vers le serveur applicatif par le biais d'un message de protocole du réseau LoRaWAN.

Le serveur applicatif peut être configuré pour identifier le deuxième équipement ou le véhicule sur lequel il est embarqué à partir des données reçues du deuxième équipement, et déterminé si le véhicule est ou non recherché, par exemple suite à un vol.

Les procédés proposés dans la présente divulgation peuvent avantageusement être appliqués au cas d'usage décrit ci-dessus, et présentent l'avantage de ne pas nécessiter que le deuxième équipement soit un noeud du réseau public LoRaWAN. Un très grand nombre d'équipement configurés en deuxième équipement dans les procédés proposés peut donc être déployé, sans induire le surcoût d'un abonnement au réseau LoRaWAN pour chaque deuxième équipement déployé.

### Application industrielle

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé de pilotage proposé et le dispositif pour la mise en oeuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de la présente divulgation, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous-combinaisons des aspects et caractéristiques font partie de la portée de la présente divulgation. En outre, il se peut que certains systèmes et équipements décrits ci-dessus n'incorporent pas la totalité des modules et fonctions décrits pour les modes de réalisation préférés.

## Revendications

1. Procédé de communication entre un premier équipement et un deuxième équipement, le premier équipement étant un équipement terminal sans fil basse consommation d'un réseau de communication de données de type LP-WAN, et le deuxième équipement étant un équipement sans fil basse consommation n'appartenant pas au réseau de communication de données de type LP-WAN, le premier équipement étant configuré pour se comporter vis-à-vis du deuxième équipement comme un noeud relais, le procédé étant mis en oeuvre par le premier équipement, et comprenant :
• recevoir, par une couche applicative du premier équipement, en provenance du deuxième équipement, sur un canal de fréquences défini pour les communications sans fil entre le premier équipement et le deuxième équipement, un message de réveil ;
• émettre, par la couche applicative du premier équipement, vers le deuxième équipement, un message d'acquittement de réception du message de réveil ;
• recevoir, par la couche applicative du premier équipement, en provenance du deuxième équipement, un paquet de données, et
• transférer, vers un serveur applicatif, par l'intermédiaire d'un noeud du réseau de communication de données de type LP-WAN, des données du paquet de données insérées dans un message de transmission de données dans le sens montant d'un protocole de communication du réseau de communication de données de type LP-WAN.

2. Procédé de communication selon la revendication 1, comprenant en outre : émettre, vers le deuxième équipement, un message de commande de configuration comprenant une commande de basculement dans un mode de fonctionnement de type-transpondeur.

3. Procédé de communication selon la revendication 2, comprenant en outre : émettre, vers un serveur de localisation configuré pour recevoir des données en provenance d'un réseau de communication de données de type LP-WAN, des données échangées avec le deuxième équipement en mode radar.

4. Procédé de communication selon l'une quelconque des revendications 1 à 3, comprenant en outre : effectuer une écoute de détection de signaux radio émis sur un ou plusieurs canaux de fréquences de réveil sur des périodes d'écoute, détecter une activité radio lors d'une période d'écoute parmi les périodes d'écoute, et basculer dans un mode de réception pour recevoir le message de réveil.

5. Procédé de communication selon l'une quelconque des revendications 1 à 4, comprenant en outre : déterminer, par la couche applicative du premier équipement, si le deuxième équipement correspond à un ou plusieurs équipements listés dans une liste d'équipements prédéfinie.

6. Procédé de communication entre un premier équipement et un deuxième équipement, le premier équipement étant un équipement terminal sans fil basse consommation d'un réseau de communication de données de type LP-WAN, et le deuxième équipement étant un équipement sans fil basse consommation n'appartenant pas au réseau de communication de données de type LP-WAN, le procédé étant mis en oeuvre par le deuxième équipement, et comprenant :
émettre, vers une couche applicative du premier équipement, un message de réveil sur un canal de fréquences défini pour les communications sans fil entre le premier équipement et le deuxième équipement ;
recevoir, en provenance de la couche applicative du premier équipement, un message d'acquittement de réception du message de réveil ; et
émettre, vers la couche applicative du premier équipement, un paquet de données.

7. de données comprend un réseau de type LoRaWAN, le premier équipement est un noeud d'extrémité du réseau de type LoRaWAN configuré pour mettre en oeuvre par sa couche applicative des fonctionnalités de noeud relais de réseau de type LoRaWAN.

8. Procédé selon la revendication 7, en ce qu'elle dépend de l'une quelconque des revendications 1 à 5, dans lequel le message de réveil, le message d'acquittement, et le message de transmission de données dans le sens montant sont des messages du protocole Relais LoRaWAN.

9. Dispositif de communication sans-fil comprenant : un émetteur/récepteur radio ; une mémoire ; au moins un processeur couplé de manière opérationnelle à l'émetteur/récepteur radio et à la mémoire, et configuré pour la mise en oeuvre d'un procédé selon l'une quelconque des revendications 1 à 8.

10. Programme d'ordinateur, chargeable dans une mémoire associée à un processeur, et comprenant des portions de code pour la mise en oeuvre des étapes d'un procédé selon l'une quelconque des revendications 1 à 8 lors de l'exécution dudit programme par le processeur.
